# EUROPEAN PATENT SPECIFICATION

(11) **EP 2 428 657 B1**
(45) Date of publication and mention of the grant of the patent: **30.11.2016**
(21) Application number: 11178125.8
(22) Date of filing: 19.08.2011
(51) Int. Cl.: F01M 1/04, F01M 11/06, F16N 7/32

(54) **Lubrication structure for four-stroke engine**
Schmierstruktur für einen Viertaktmotor
Structure de lubrification pour moteurs à quatre temps

(30) Priority: 09.09.2010 JP 2010202285
(43) Date of publication of application: 14.03.2012
(73) Proprietor: Makita Corporation, Anjo, Aichi 446-8502 (JP)
(72) Inventor: Sugiyama, Masaki, Numazu-shi, Shizuoka 4108535 (JP); Hasegawa, Tetsuya, Anjo-chi, Aichi 446-8502 (JP)
(74) Representative: RGTH

(56) References cited:
- EP-A1- 2 305 972
- EP-A2- 2 103 786
- US-A1- 2009 013 959

## Description

### BACKGROUND

### Field of the Invention

The present invention relates to a lubrication structure for a four-stroke engine, and more specifically, to a lubrication structure for a four-stroke engine mounted in a portable working machine such as a brush cutter and a backpack blower.

### Description of the Related Art

Conventionally, a lubrication structure for a four-stroke engine mounted in a portable working machine has been required to reliably lubricate driving parts in an engine whatever postures the working machine takes, because the working machine is tilted at various angles in use.

A lubrication structure for a four-stroke engine mounted in a portable working machine is disclosed, for example, in Japanese Patent Application Laid-Open Publication No.HEI8-260926, which includes an oil storage chamber enclosing substantially the circumference of a crank chamber.

Generally, a lubrication structure for a four-stroke engine needs a larger amount of oil in the vicinity of a crank axle than in a valve operating mechanism.

However, the above-described patent document discloses a configuration where oil mist is supplied from a crank chamber having a crank axle to the valve operating mechanism without adjusting the concentration of the oil mist. Accordingly, oil is oversupplied to the valve operating mechanism.

By this means, an amount of oil supplied to the valve operating mechanism increases and the oil stays in an oil supply passageway through the valve operating mechanism, and then the oil is discharged at the same time as blowby gas in the supply passageway is discharged to a combustion chamber.

In this way, the configuration disclosed in the above-described patent document has a technical problem that oil is oversupplied to the valve operating chamber, and therefore extra oil is discharged to the combustion chamber, so that oil is consumed in a short period of time.

Therefore, oil consumption for a short period of time causes the period of time over which oil is refilled until the next time, to be shortened, and therefore, if refilling of oil is neglected, lubrication trouble may occur. In addition, unburned oil is discharged from the combustion chamber to the outside, and this may cause environmental damage.

The US 2009/0013959 A1 shows a lubrication system for a small lightweight four-stroke engine is disclosed. The lubrication system, provided with a with at one end of a flexible oil tube inserted into an oil reservoir is capable of providing a sufficient lubrication to components of the engine which may operate in a horizontal posture, a vertical posture, or any posture therebetween.

The EP 2103786 A discloses a lubrication apparatus for an engine which includes a crankshaft chamber, a camshaft chamer and an oil reservoir chamber, wherein an oi-suction piping path is provided in the oil reservoir chamber and is communicated between the crankshaft chamber and the oil reservoir chamber. The oil-suction piping path includes, among others, a roatable pipe including a plurality of oil-suction orifices located at wall of the rotable pipe.

### SUMMARY

It is therefore an advantage of an aspect of the present invention to provide a lubrication structure for a four-stroke engine that can prevent oil from being consumed for a short period of time by lubricating a crank chamber having a crank axle and a valve operating mechanism, with respective appropriate amount of oil.

The lubrication structure for a four-stroke engine according to the present invention is configured to lubricate driving parts by supplying oil stored in an oil tank provided separately from a crank chamber, using pressure fluctuation in the crank chamber. The lubrication structure may include: a first circulating route configured to supply the oil from the oil tank to the crank chamber and return oil mist generated in the crank chamber to the oil tank; a second circulating route configured to supply the oil mist from the oil tank to a

valve operating mechanism and return to the oil tank; a discharge passageway configured to discharge blowby gas contained during circulation of the oil from the second circulating route to a combustion chamber; and a partition wall configured to separate between the crank chamber and the oil tank. A central part of the partition wall is located vertically above a surface of the oil stored in the oil tank even if an engine body is tilted, and an opening A1 of the second circulating route is formed in the central part, the oil mist being supplied from the opening A1.

In the lubrication structure for a four-stroke engine according to the present invention, an opening B1 of the first circulating route is formed in the central part of the partition wall. The oil is returned from the opening B1 to the oil tank.

In the lubrication structure for a four-stroke engine according to the present invention (not claimed), the opening B1 of the first circulating route may be configured to extend much farther in a direction in which the oil is discharged to the oil tank than the opening A1 of the second circulating route.

In the lubrication structure for a four-stroke engine according to the present invention (not claimed), the opening B1 of the first circulating route may include a reed valve.

In the lubrication structure for a four-stroke engine according to the present invention, part of the second circulating route is formed by an elastic tubular part, and an end of the elastic tubular part may form the opening A1 of the second circulating route.

In the lubricating structure for a four-stroke engine according to the present invention, a pair of upright walls facing one another is integrally formed with the central part of the partition wall. The elastic tubular part is provided between the pair of upright walls, and a fixing part is placed on the pair of upright walls. The fixing part holds the elastic tubular part and a reed valve with one bolt, and fix an end of the reed valve provided in the opening B1.

In the lubrication structure for a four-stroke engine according to the present invention, the pair of upright walls are configured to be connected by a plurality of connection walls.

In the lubrication structure for a four-stroke engine according to the present invention, the elastic tubular part is fixed by the plurality of connection walls.

In the lubrication structure for a four-stroke engine according to the present invention (not claimed), the direction in which the oil is discharged, may be configured to be parallel to a direction in which the oil mist is supplied from the opening A1 of the second circulating route.

In the lubrication structure for a four-stroke engine according to the present invention (not claimed), the direction in which the oil mist is supplied, may be configured to be opposite to the direction in which the oil is discharged.

In the lubricating structure for a four-stroke engine according to the present invention, the partition wall may be configured to be located near a rotating trajectory of a crank web rotating in the crank chamber.

According to the present invention, even if the engine body is tilted, the central part of the partition wall is located vertically above the surface of oil stored in the oil tank, and the opening A1 of the second circulating route to supply oil mist is formed in the central part, and therefore, it is possible to supply oil mist with a reduced concentration generated in the crank chamber, to the second circulating route. By this means, it is possible to lubricate the crank chamber having the crank axle and the valve operating mechanism, with respective appropriate amount of oil. Then, excess oil is not supplied to the second circulating route, so that it is possible to prevent oil from being consumed for a short period of time through the discharge route.

In addition, the opening B1 of the first circulating route to return oil to the oil tank is formed in the center of the partition wall, and therefore the opening B1 is located vertically above the surface of oil, and the oil returned from the crank chamber hardly ruffles the surface of oil. By this means, oil mist is restrained from being generated in the oil tank, and therefore, it is possible to supply oil mist with a reduced concentration to the second circulating route.

In addition, a configuration is adopted where the opening B1 of the first circulating route extends much farther in the direction in which oil is discharged to the oil tank than the opening A1 of the second circulating route to prevent the oil discharged from the first circulating route from directly entering the second circulating route. By this means, it is possible to more reliably prevent oil from being oversupplied to the opening A1.

In addition, the opening B1 of the first circulating route includes a reed valve. Therefore, it is possible to easily set the discharge direction of oil, and also easily design the inner structure of the oil tank.

Moreover, part of the second circulating route is formed by an elastic tubular part, and the end of the elastic tubular part forms an opening A1 of the second circulating route, and therefore it is possible to easily position the opening A1.

Moreover, the pair of upright walls facing one another is integrally formed in the central part, and the elastic tubular part is provided between the pair of upright walls. Then, the elastic tubular part and a reed valve are held by a fixing part for fixing an end of the reed valve, with one bolt. By this means, it is possible to reduce the number of parts and realize easy assembly.

Moreover, the pair of upright walls is formed to be connected to one another with a plurality of connection walls, so that it is possible to securely fix the elastic tubular part.

Moreover, it is possible to securely fix the elastic tubular part by using a plurality of connection walls and prevent the elastic tubular part from deforming, and therefore the fluid resistance of oil does not increase.

In addition, the direction in which the oil is discharged from the opening B1 of the first circulating route to the oil tank is parallel to the direction in which the oil is supplied from the opening A1 of the second circulating route. Therefore, the effective distance over which the oil discharged from the opening B1 of the first circulating route enters the opening A1 of the second circulating route increases. As a result of this, it is possible to reduce the concentration of oil mist in the oil tank and reliably prevent oil from being oversupplied to the opening A1 of the second circulating route.

Moreover, the direction in which the oil is supplied is opposite to the direction in which the oil is discharged, and therefore, the concentration of oil mist in the oil tank can be appropriately adjusted, and it is possible to lubricate the crank chamber having the crank axle and the valve operating mechanism, with respective appropriate amount of oil. Then, excess oil is not supplied to the second circulating route, so that it is possible to prevent oil from being consumed for a short period of time through the discharge route.

Furthermore, the partition wall is formed near the rotating trajectory of a crank web rotating in the crank chamber, and therefore the crank web can scrape off the oil remaining in the crank chamber. This helps oil mist to be generated in the crank chamber. By this means, it is possible to improve performance of lubricating the crank axle accommodated in the crank chamber and so forth.

### BRIEF DESCRIPTION OF THE DRAWINGS

Fig. 1A is a perspective view schematically showing the configuration of a four-stroke engine according to an embodiment of the present invention;
Fig. 1B is a plan view schematically showing the configuration of the four-stroke engine according to one embodiment of the present invention;
Fig. 2 is a cross sectional view schematically showing the four-stroke engine taken along I-I' line shown in Fig. 1B;
Fig. 3 is a perspective view schematically showing the configuration of a crank case in the four-stroke engine according to one embodiment of the present invention, from the oil tank side;
Fig. 4 is a cut-away perspective view schematically showing the configuration of the crank case in the four-stroke engine according to one embodiment of the present invention, from the oil tank side;
Fig 5 is an exploded perspective view schematically showing the configuration of the crank case in the four-stroke engine according to one embodiment of the present invention in a state in which a reed valve, a fixing part and bolt are detached;
Fig. 6 is an enlarged perspective view showing the configuration of the crank case in the four-stroke engine according to one embodiment of the present invention by enlarging the neighborhood of the oil supply hole of a second oil feeding passageway and the supply hole of a supply passageway;
Fig. 7A is a cross sectional view schematically showing a first state of the crank case in the four-stroke engine according to one embodiment of the present invention;
Fig. 7B is a cross sectional view schematically showing a second state of the crank case in the four-stroke engine according to one embodiment of the present invention; and
Fig. 8 schematically explains the configuration of a lubrication structure for the four-stroke engine according to one embodiment of the present invention.

### DETAILED DESCRIPTION

A lubrication structure for a four-stroke engine 30 according to the present embodiment lubricates driving parts by supplying oil stored in an oil tank 55 provided separately from a crank chamber 35, using pressure fluctuation in the crank chamber 35 due to the reciprocating motion of a piston 34.

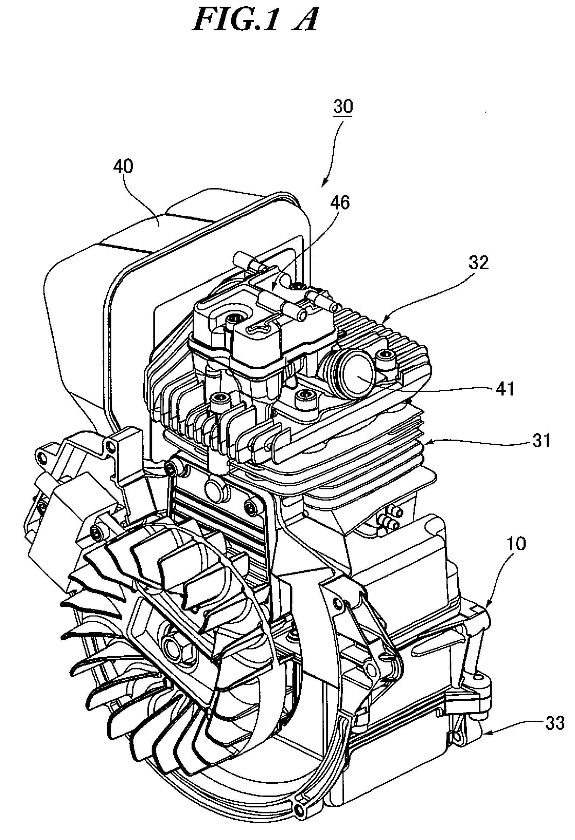

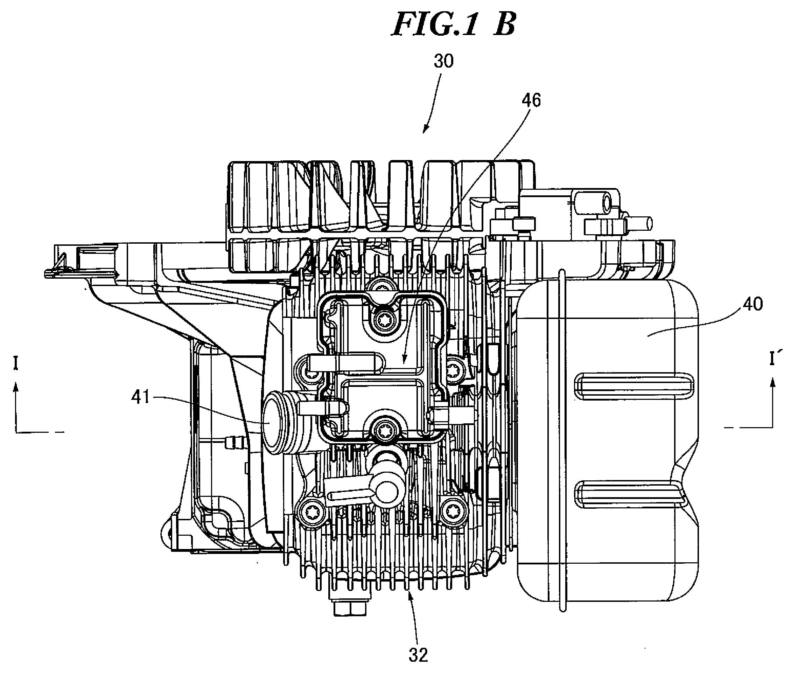

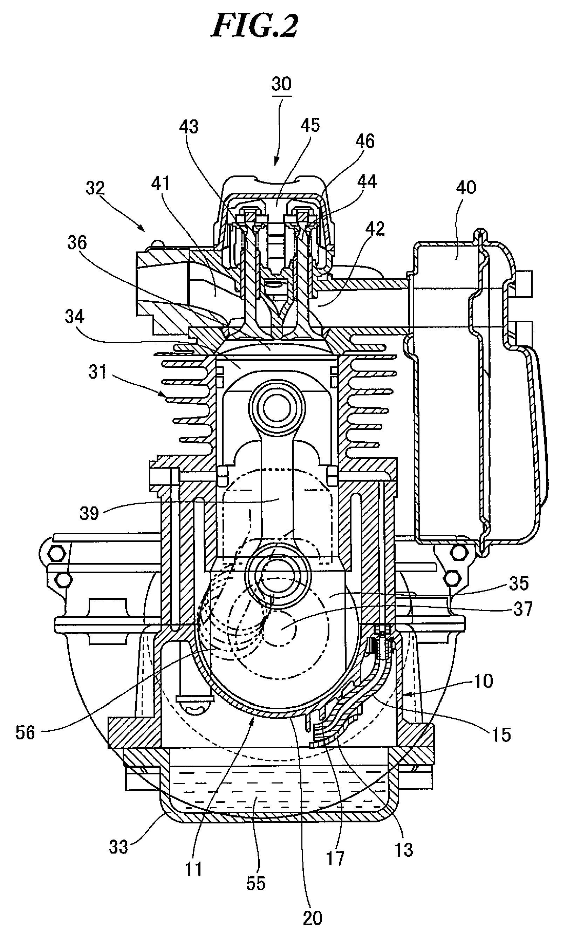

Now, an embodiment of the present invention will be described in detail with reference to the drawings. First, the configuration of the four-stroke engine 30 according to the present embodiment will be explained with reference to Fig. 1A, Fig. 1B and Fig. 2. Fig. 1A is a perspective view schematically showing the configuration of the four-stroke engine 30 according to one embodiment of the present invention; Fig. 1B is a plan view schematically showing the configuration of the four-stroke engine 30 according to one embodiment of the present invention; and Fig. 2 is a cross sectional view schematically showing the four-stroke engine taken along I-I' line shown in Fig. 1B.

As illustrated in Fig. 1A, Fig. 1B and Fig. 2, the four-stroke engine 30 according to the present embodiment is configured to include a cylinder block 31 that slidably supports the piston 34; a crank case 10 that is disposed in the same side as one end side of the cylinder block 31 in the longitudinal direction (the lower side in Fig. 2) and forms a crank chamber 35; and a cylinder head 32 that is disposed in the same side as the other end side of the cylinder block 31 in the longitudinal direction (the upper side in Fig. 2) and forms a combustion chamber 36 with the cylinder block 31.

In the present embodiment, these cylinder block 31, cylinder head 32 and crank case 10 are separately formed and connected to each other using bolts. Then, an oil case 33 to store oil is coupled to the lower side of the crank case 10.

In addition, the crank chamber 35 is provided with the crank case 10, and a crank axle 37 is rotatably supported by these cylinder block 31 and crank case 10.

To be more specific, both ends of the crank axle 37 are disposed to project from the crank chamber 35 formed in the crank case 10, and sandwiched between the cylinder block 31 and the crank case 10 to be rotatably supported.

Then, the piston 34 connected to the crank axle 37 in the crank chamber 35 via a crank web 56 and a connecting rod 39, is inserted in a cylinder 38 provided in the cylinder block 31, where the piston 34 can move upward and downward. By this means, reciprocating motion of the piston 34 is converted into rotational motion of the crank axle 37.

Meanwhile, as described above, the cylinder head 32 is provided in the other end side of the cylinder block 31 in the longitudinal direction. An intake port 41 in communication with a carburetor (not shown) and an exhaust port 42 in communication with a muffler 40 are provided in the cylinder head 32. An intake valve 43 and an exhaust valve 44 to open and close the intake port 41 and the exhaust port 42, respectively, are also provided in the cylinder head 32.

In addition, a valve operating chamber 45 that accommodates the intake valve 43 and the exhaust valve 44 is formed in part of the cylinder head 32. This valve operating chamber 45 is formed by the cylinder head 32 and a valve operating chamber cover 46.

In addition, a valve operating mechanism 47 to drive the intake valve 43 and the exhaust valve 44 is connected to these intake valve 43 and exhaust valve 44. The valve operating mechanism 47 is configured to include a valve driving gear 48 fixed to the crank axle 37; a cam gear 49 driven by the valve driving gear 48; a cam 50 connected to one end of the cam gear 49; a pair of cam followers swung by the cam 50 and rotatably supported by the cylinder block 31; a pair of push rods that is supported by a rocker shaft provided in the head of the cylinder block 31 and has one-side ends contacting respective valve heads of the intake valve 43 and the exhaust valve 44; and a valve spring that biases the intake valve 43 and the exhaust valve 44 in the direction to close each valve.

Among parts constituting the valve operating mechanism 47, the valve driving gear 48 and the cam gear 49 are accommodated in a valve operating mechanism chamber 54. In addition, among parts constituting the valve operating mechanism 47, the push rod and the valve spring are accommodated in the valve operating chamber 45.

According to the present embodiment, the oil case 33 is formed as a housing having four sides and the bottom side, and mounted to the crank case 10 to form the crank chamber 35. Then, a half-cylindrical part of the crank case 10 in which the crank axel 37 is rotatably accommodated is a partition wall 11 to separate between the crank chamber 35 and the oil tank 55.

A prescribed amount of oil is stored in the oil tank 55. Here, the prescribed amount of oil is referred to an amount of oil to appropriately lubricate the engine. To be more specific, when an amount of oil stored in the oil tank 55 is smaller than a prescribed lower limit, it is not possible to circulate enough oil to appropriately lubricate the engine, and, on the other hand, when it is greater than a prescribed upper limit, the opening of the supply passageway 130 sinks below the surface of oil, and therefore it is not possible to successfully circulate oil mist required to appropriately lubricate the engine. That is, "a prescribed amount" is within a range from a prescribed lower limited amount to a prescribed upper limited amount.

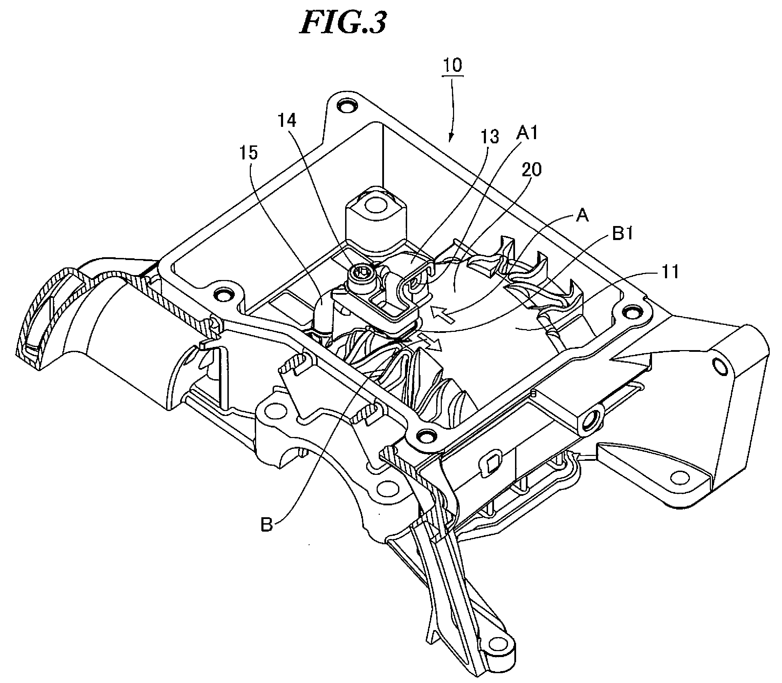

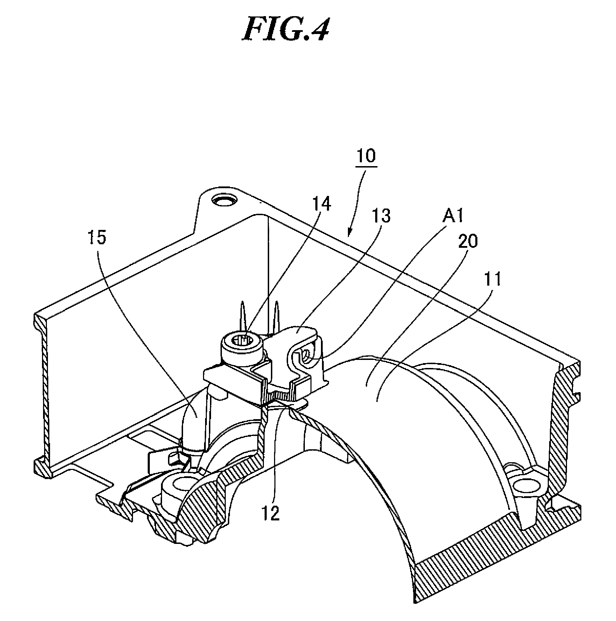

Now, the inner structure of the oil tank according to the present embodiment will be described with reference to Fig. 3 to Fig. 7. Fig. 3 is a perspective view schematically showing the configuration of the crank case 10 in the four-stroke engine 30 according to one embodiment of the present invention, from the oil tank 55 side. Fig. 4 is a cut-away perspective view schematically showing the configuration of the crank case 10 in the four-stroke engine 30 according to one embodiment of the present invention, from the oil tank side 55.

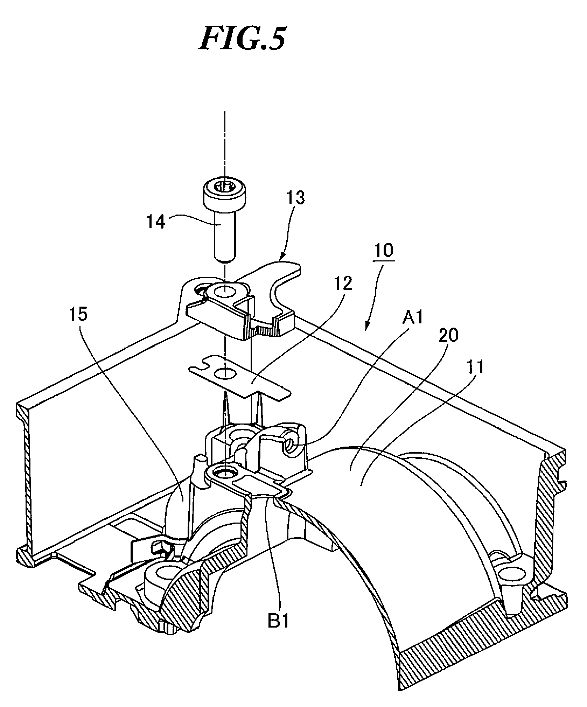

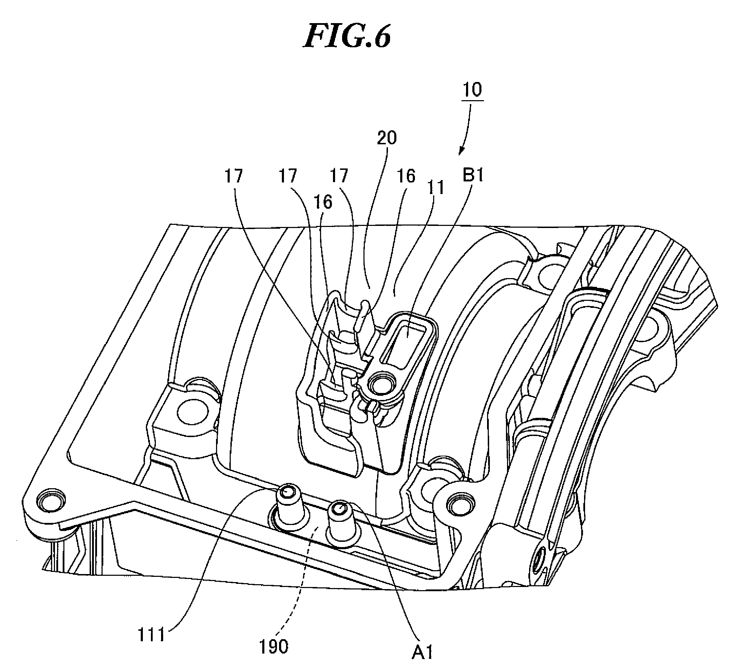

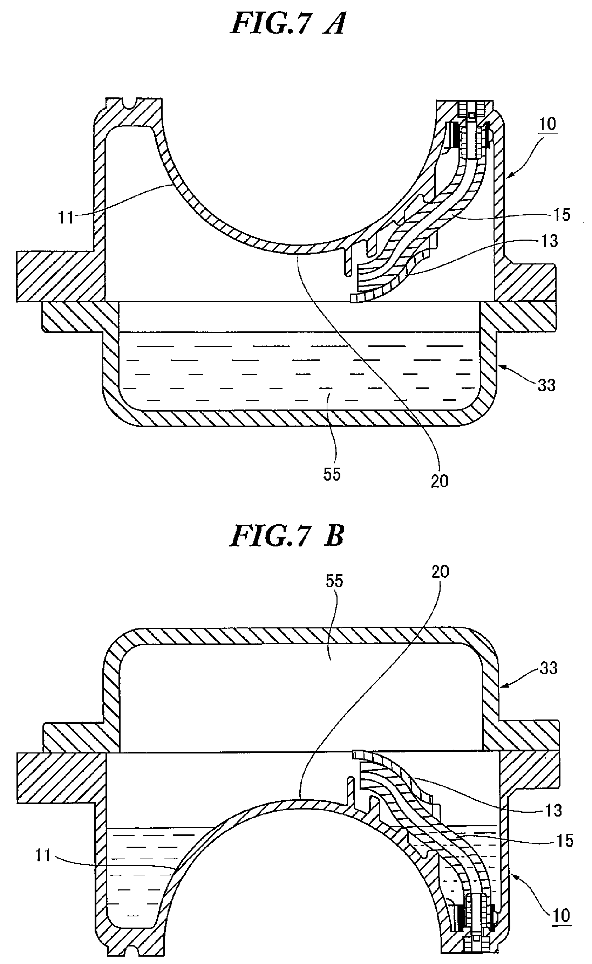

In addition, Fig 5 is an exploded perspective view schematically showing the configuration of the crank case 10 in the four-stroke engine 30 according to one embodiment of the present invention in a state in which a reed valve 12, a fixing part 13 and a bolt 14 are detached. Fig. 6 is an enlarged perspective view showing the configuration of the crank case 10 in the four-stroke engine 30 according to one embodiment of the present invention by enlarging the neighborhood of an oil supply hole 121 of a second oil feeding passageway 120 and a supply hole of a supply passageway 130. Fig. 7A is a cross sectional view schematically showing a first state of the crank case 10 in the four-stroke engine 30 according to one embodiment of the present invention. Fig. 7B is a cross sectional view schematically showing a second state of the crank case 10 in the four-stroke engine 30 according to one embodiment of the present invention.

As illustrated in Fig. 3 to Fig. 7, the partition wall 11 separates between the crank chamber 35 and the oil tank 55 according to the present embodiment. This partition wall 11 is shaped as a half cylinder.

That is, this partition wall 11 allows the crank web 56 to be rotatably accommodated in the crank chamber 35 and has a curved surface bulging toward the oil tank 55 side. Here, the curved surface maximally bulges toward the oil tank 55 side at the central part 20.

With the present embodiment, a configuration is adopted where even if the engine body is tilted, the central part 20 of the half-cylindrical partition wall 11 is located vertically above the surface of oil stored in the oil tank 55 where the oil tank 55 stores a prescribed amount of oil. Then, an opening A1 is formed in the central part 20 to supply oil mist to the valve operating mechanism 47.

In this way, the central part 20 of the partition wall 11 is located vertically above the surface of oil stored in the oil tank 55, and the opening A1 is formed in the central part 20. Therefore, it is possible to prevent liquid oil stored in the oil tank 55 from entering the opening A1.

This opening A1 is formed by the end of a flexible tubular part 15 made of an elastic material such as rubber. This elastic tubular part 15 is sandwiched between a pair of upright walls 16 formed integrally with the central part 20.

A plurality of connection walls 17 are formed between the pair of upright walls 16 to improve the rigidity of the pair of upright walls 16.

It is possible to more firmly fix the elastic tubular part 15 by sandwiching the elastic tubular part 15 between the connection walls 17.

Moreover, an opening B1 is formed in the central part 20 to return the oil in the crank chamber 35 to the oil tank 55. The reed valve 12 is provided in this opening B1.

As fixing means for the reed valve 12 and the elastic tubular part 15 according to the present embodiment, the pair of upright walls 16 sandwiches the elastic tubular part 15 and the fixing part 13 placed on the pair of upright walls 16 holds the reed valve 12, as described above. Then, the fixing part 13 holding these reed valve 12 and the elastic tubular part 15 is fixed to the crank case 10 with one bolt 14, and therefore assembly can be made easy.

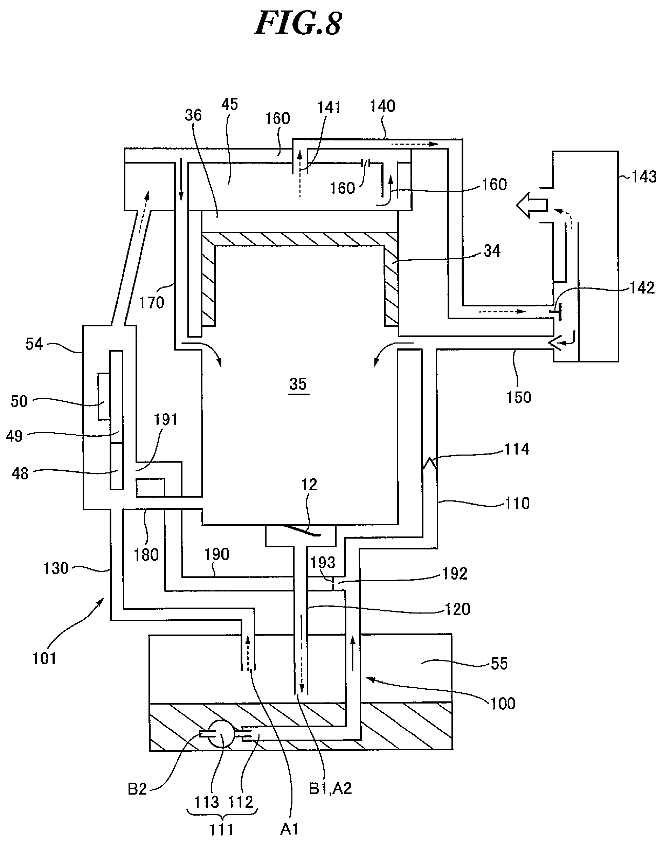

Next, an oil lubrication structure to lubricate the inside of the four-stroke engine according to the present embodiment will be explained with reference to Fig. 8. Fig. 8 schematically explains the configuration of a lubrication structure for the four-stroke engine according to one embodiment of the present invention.

As illustrated in Fig. 8, a first circulating route 100 to circulate oil is provided between the oil tank 55 and the crank chamber 35. This first circulating route 100 is configured to include a first oil feeding passageway 110 to supply oil from the oil tank 55 to the crank chamber 35, and a second oil feeding passageway 120 to supply oil mist generated in the crank chamber 35 to the oil tank 55.

A suction part 111 to suck oil stored in the oil tank 55 is mounted in the oil supply hole at the end of the first oil feeding passageway 110 in the oil tank 55 side.

The suction part 111 has a flexible tubular portion 112 made of an elastic material such as rubber, and weight 113 connected to the tubular portion 112 and having an opening B2 to suck oil.

The weight 113 in the suction part 111 can move in the vertical direction due to its own weight. Therefore, the weight 113 can sink in oil even if the four-stroke engine 30 is tilted.

In addition, a one-way valve 114 that makes oil flow through the first oil feeding passageway 110 in only one direction, is provided in the way of the first oil feeding passageway 110. This one-way valve 114 is configured to open and close in response to a change in the pressure in the crank chamber 35.

That is, a negative pressure is created in the crank chamber 35 because the piston 34 moves toward the top dead center, and therefore the one-way valve 114 opens. This allows oil to pass through the first oil feeding passageway 110. At this time, the oil stored in the oil tank 55 is sucked from the opening B2 and fed to the crank chamber 35 via the first oil feeding passageway 110. On the other hand, a positive pressure is created in the crank chamber 35 because the piston 34 moves toward the bottom dead center, and therefore the one-way valve 114 closes not to allow oil to pass through the first oil feeding passageway 110. As a result of this, it is possible to prevent oil from flowing backward.

The partition wall 11 in the crank case 10 is disposed nearby the rotating trajectory of the crank web 56 that rotates in the crank chamber 35. Then, the crank web 56 scrapes off the oil remaining in the crank chamber 35, and therefore it is possible to help oil mist to be generated in the crank chamber 35. Then, the oil mist generated in the crank chamber 35 returns to the oil tank 55 via the opening B1 which opens at the time reed valve 12 opens and closes.

To be more specific, a negative pressure is created in the crank chamber 35 because the piston 34 moves toward the top dead center, and therefore the reed valve 12 closes not to allow oil to pass through the second oil feeding passageway 120. On the other hand, a positive pressure is created in the crank chamber 35 because the piston 34 moves toward the bottom dead center, and therefore the reed valve 12 opens to allow oil to pass through the second oil feeding passageway 120.

At this time, the opening B1 is located vertically above the surface of oil, and therefore it is possible to prevent the oil discharged from the opening B1 from spouting up from the surface of oil. Then, oil mist is increasingly liquefied in the oil tank 55.

A second circulating route 101 to circulate oil is provided between the oil tank 55 and the valve operating chamber 45. This second circulating route 101 is formed by the supply passageway 130, the valve operating mechanism chamber 54, the valve operating chamber 45, a third oil feeding passageway 170, the crank chamber 35 and the second oil feeding passageway 120. Here, with this example, the first circulating route 100 and the second circulating route 101 both use the second oil feeding passageway 120. However, the first circulating route 100 and the second circulating route 101 may individually use different oil supply passageways between the crank chamber 35 and the oil tank 55, and an opening A2 may additionally be provided for the second circulating route 101.

The supply passageway 130 allows oil mist generated in the crank chamber 35 to be supplied from the oil tank 55 to the valve operating mechanism chamber 54 and the valve operating chamber 45. Therefore, oil flows through the second circulating route 101 to lubricate the valve driving gear 48, the cam gear 49, the cam 50, the push rod and the valve spring constituting the valve operating mechanism 47.

The above-described opening A1 is formed in one end of the supply passageway 130. This opening A1 is formed in the central part 20, like the opening B1.

With the present embodiment, a discharge direction B in which oil is discharged from the opening B1 to the oil tank 55 and a supply direction A in which oil is supplied from the opening A1 to the supply passageway 130 are arranged in parallel with one another. Then, the opening B1 is located to extend much farther in the discharge direction B than the opening A1.

Here, with the present embodiment, the discharge direction B and the supply direction A are opposite to one another, and therefore the concentration of oil mist supplied to the second circulating route 101 is more appropriately adjusted. Here, it is important that the opening B1 is located to extend much farther in the discharge direction B than the opening A1, and, even if the discharge direction B and the supply direction A are the same direction, it is possible to expect a satisfactory effect.

As described above, the concentration of the oil mist supplied to the supply passageway 130 is lower than in the crank chamber 35.

Therefore, it is possible to supply oil mist having a concentration not being needlessly high, to the valve operating chamber 45.

A suction passageway 160 to suck oil remaining in the valve operating chamber 45 is provided in the valve operating chamber 45. A third oil feeding passageway 170 is provided between the suction passageway 160 and the crank chamber 35.

One open end of the third oil feeding passageway 170 is connected to the suction passageway 160, and the other open end is connected to the crank chamber 35. At this time, the other open end of the third oil feeding passageway 170 is located to fully open at the time the piston 34 arrives at the top dead center, like the first oil feeding passageway 110.

At this time, the oil mist remaining in the valve operating chamber 45 is sucked from the opening of the third oil feeding passageway 170 and fed to the crank chamber 35 via the third oil feeding passageway 170. On the other hand, a positive pressure is created in the crank chamber 35 because the piston 34 moves toward the bottom dead center, and therefore the third oil feeding passageway 170 does not allow oil to pass through. As a result of this, it is possible to prevent oil from flowing backward into the valve operating chamber 45. In addition, a positive pressure is created in the crank chamber 35 to open the reed valve 12, and therefore excess oil in the crank chamber 35 is returned to the oil tank 55 via the second oil feeding passageway 120.

In addition, a return passageway 180 to return excess oil in the valve operating mechanism chamber 54 to the crank chamber 35 is provided between the valve operating mechanism chamber 54 and the crank chamber 35.

Moreover, a flow rate adjusting passageway 190 is provided between the valve operating mechanism chamber 54 and the first oil feeding passageway 110. This flow rate adjusting passageway 190 adjusts the flow rate of oil supplied to the crank chamber 35 via the first oil feeding passageway 110 by sucking the air in the valve operating mechanism chamber 54.

A flow restrictor 193 is provided in the flow rate adjusting passageway 190. This flow restrictor 193 adjusts an amount of air sucked by the flow rare adjusting passageway 190.

A discharge passageway 140 is provided in the valve operating chamber 45 to discharge blowby gas contained during circulation of oil, to the combustion chamber 36. One end 141 of the discharge passageway 140 is provided in the vale operating chamber 45 and the other end is connected to an air cleaner 143.

The blowby gas supplied to the air cleaner 143 is separated into gas and liquid by an oil separator provided in the air cleaner 143, that is, separated into oil mist and blowby gas. The oil having been separated into gas and liquid is supplied to the crank chamber 35 through a reflux passageway 150 connecting between the air cleaner 143 and the crank chamber 35. The blowby gas is burnt in the combustion chamber 36, and then discharged to the outside via a muffler 40.

As described above, the lubrication structure for the four-stroke engine 30 according to the present embodiment includes the first oil feeding passageway 110, the second oil feeding passageway 120, the supply passageway 130, the discharge passageway 140, the reflux passageway 150, the suction passageway 160, the third oil feeding passageway 170, the return passageway 180 and the flow rate adjusting passageway 190, and makes it possible to lubricate the crank chamber 35, the valve operating mechanism chamber 54 and the valve operating chamber 45.

Then, the oil fed from the second oil feeding passageway 120 is prevented from directly entering the supply passageway 130, and therefore it is possible to supply low-concentration oil from the supply passageway 130 to the valve operating mechanism chamber 54 and the valve operating chamber 45.

By this means, it is possible to reduce an amount of oil to be discharged to the combustion chamber 36 with blowby gas, and therefore, the efficiency of the lubrication structure can be improved.

The four-stroke engine 30 according to the present embodiment is suitable to be used in, particularly, a portable working machine such as a brush cutter and a backpack blower.

## Claims

1. A lubrication structure for a four-stroke engine (30) configured to lubricate driving parts by supplying oil stored in an oil tank (55) provided separately from a crank chamber (35), using pressure fluctuation in the crank chamber (35), the lubrication structure comprising:
a first circulating route (100) configured to supply the oil from the oil tank (55) to the crank chamber (35)and return oil mist generated in the crank chamber (35) to the oil tank (55);
a second circulating route (101) configured to supply the oil mist from the oil tank (55) to a valve operating mechanism (47) and return to the oil tank (55);
a discharge passageway (140) configured to discharge blowby gas contained during circulation of the oil from the second circulating route (120) to a combustion chamber (36); and
a partition wall (11) configured to separate between the crank chamber (35) and the oil tank (55),
wherein:
a central part (20) of the partition wall (11) is located vertically above a surface of the oil stored in the oil tank (55) even if an engine body is tilted;
an opening A1 of the second circulating route (101) is formed in the central part (20), the oil mist being supplied from the opening A1;
an opening B1 of the first circulating route (100) is formed in the central part (20) of the partition wall, the oil being returned from the opening B1 to the oil tank (55);
**characterised in that** part of the second circulating route (101) is formed by an elastic tubular part (15), and an end of the elastic tubular part forms the opening A1 of the second circulating route (101);
a pair of upright walls (16) facing one another is integrally formed with the central part (20) of the partition wall (11), the elastic tubular part (15) being provided between the pair of upright walls (16), and a fixing part (13) is placed on the pair of upright walls (16), the fixing part (13) holding the elastic tubular part (15) and a reed valve (12) with one bolt, and fixing an end of the reed valve (12) provided in the opening B1; and
the pair of upright walls (16) are configured to be connected by a plurality of connection walls (17) and the elastic tubular part (15) is fixed by the plurality of connection walls (17).

2. The lubricating structure for a four-stroke engine (30) according to claim 1, wherein the partition wall (11) is configured to be located near a rotating trajectory of a crank web (56) rotating in the crank chamber (35).

## Patentansprüche

1. Eine Schmierungsvorrichtung für einen Viertaktmotor (30), die konfiguriert ist, Antriebsteile zu schmieren durch die Bereitstellung von in einem getrennt von einer Kurbelkammer (35) vorgesehenen Öltank (55) gespeicherten Öl, unter Verwendung von Druckschwankung in der Kurbelkammer (35), wobei die Schmierungsvorrichtung folgendes umfasst:
einen ersten Umlaufweg (100), der konfiguriert ist, das Öl aus dem Öltank (55) zu der Kurbelkammer (35) zuzuführen und den in der Kurbelkammer (35) erzeugten Ölnebel zu dem Öltank (55) zurückzuführen;
einen zweiten Umlaufweg (101), der konfiguriert ist, den Ölnebel aus dem Öltank (55) zu einem Ventilbetätigungsmechanismus (47) zuzuführen und zu dem Öltank (55) zurückzuführen;
einen Auslassdurchgang (140), der konfiguriert ist während des Umlaufs des Öls aufgenommenes Blowby-Gas aus dem zweiten Umlaufweg (120) in eine Verbrennungskammer (36) abzuführen; und
eine Trennwand (11), die konfiguriert ist, um die Kurbelkammer (35) von dem Öltank (55) zu trennen,
wobei:
ein Mittelteil (20) der Trennwand (11) vertikal über einer Oberfläche des gespeicherten Öls in dem Öltank (55) angeordnet ist, selbst wenn ein Motorkörper geneigt ist;
eine Öffnung A1 des zweiten Umlaufwegs (101) in dem Mittelteil (20) ausgebildet ist, wobei der Ölnebel von der Öffnung A1 zugeführt wird;
eine Öffnung B1 des ersten Umlaufwegs (100) in dem Mittelteil (20) der Trennwand ausgebildet ist, wobei das Öl von der Öffnung B1 zu dem Öltank (55) zurückgeführt wird;
**dadurch gekennzeichnet, dass**
ein Teil des zweiten Umlaufwegs (101) durch einen elastischen röhrenförmigen Teil (15) gebildet wird, und ein Ende des elastischen röhrenförmigen Teils die Öffnung A1 des zweiten Umlaufwegs (101) bildet;
zwei aufrechte, einander gegenüberstehende Wände (16) einstückig mit dem Mittelteil (20) der Trennwand (11) ausgebildet sind, wobei das elastische röhrenförmige Teil (15) zwischen den aufrechten Wänden (16) vorgesehen ist und ein Befestigungsteil (13) an den aufrechten Wänden (16) angeordnet ist, wobei das Befestigungsteil (13) das elastische röhrenförmige Teil (15) und ein Reed-Ventil (12) mit einer Schraube hält und ein Ende des in der Öffnung B1 vorgesehenen Reed-Ventils (12) fixiert; und
die aufrechten Wände (16) konfiguriert sind, durch eine Vielzahl von Verbindungswänden (17) verbunden zu werden (17) und das elastische röhrenförmige Teil (15) durch die Vielzahl von Verbindungswänden (17) fixiert ist.

2. Die Schmierungsvorrichtung für einen Viertaktmotor (30) gemäß Anspruch 1, wobei die Trennwand (11) konfiguriert ist, in der Nähe einer sich drehenden Flugbahn einer sich in der Kurbelkammer (35) drehenden Kurbelwange (56) angeordnet zu sein.

## Revendications

1. Structure de lubrification pour un moteur à quatre temps (30) configurée pour lubrifier des organes d'entrainement en fournissant de l'huile stockée dans un réservoir d'huile (55) fourni séparément à partir d'une chambre de vilebrequin (35) en utilisant une fluctuation de pression dans la chambre de vilebrequin (35), la structure de lubrification comprenant :
un premier trajet de circulation (100) configuré pour fournir l'huile à partir du réservoir d'huile (55) jusqu'à la chambre de vilebrequin (35) et faire revenir un brouillard d'huile généré dans la chambre de vilebrequin (35) vers le réservoir d'huile (55) ;
un deuxième trajet de circulation (101) configuré pour fournir le brouillard d'huile du réservoir d'huile (55) jusqu'à un mécanisme de commande de soupapes (47) et le faire revenir au réservoir d'huile (55) ;
un passage de refoulement (140) configuré pour refouler du gaz de carter contenu pendant la circulation de l'huile depuis le deuxième trajet de circulation (120) jusqu'à une chambre de combustion (36) ; et
une cloison (11) configurée pour la séparation entre la chambre de vilebrequin (35) et le réservoir d'huile (55),
dans laquelle :
une partie centrale (20) de la cloison (11) est située verticalement au-dessus d'une surface de l'huile stockée dans le réservoir d'huile (55) même si un corps du moteur est incliné ;
une ouverture A1 du deuxième trajet de circulation (101) étant formée dans la partie centrale (20), le brouillard d'huile étant fourni à partir de l'ouverture A1;
une ouverture B1 du premier trajet de circulation (100) étant formée dans la partie centrale (20) de la cloison, l'huile étant renvoyée depuis l'ouverture B1 jusqu'au réservoir d'huile (55) ;
**caractérisée en ce que**
une partie du deuxième trajet de circulation (101) est formée par une partie tubulaire élastique (15), et une extrémité de la partie tubulaire élastique formant l'ouverture A1 du deuxième trajet de circulation (101) ;
une paire de parois dressées (16) se faisant face l'une de l'autre étant intégralement formées avec la partie centrale (20) de la cloison (11), la partie tubulaire élastique (15) étant fournie entre la paire de parois dressées (16), et une partie de fixation (13) étant placée sur la paire de parois dressées (16), la partie de fixation (13) maintenant la partie tubulaire élastique (15) et un clapet à lamelles (12) avec un boulon et fixant une extrémité du clapet à lamelles (12) fourni dans l'ouverture B1; et
la paire de parois dressées (16) étant configurées pour être reliées grâce à une pluralité de parois de liaison (17), et la partie tubulaire élastique (15) étant fixée grâce à la pluralité des parois de liaison (17).

2. Structure de lubrification pour un moteur à quatre temps (30) selon la revendication 1, dans laquelle la cloison (11) est configurée pour se situer près d'une trajectoire de rotation d'un bras de vilebrequin (56) tournant dans la chambre de vilebrequin (35).
